# FASCICULE DE BREVET EUROPEEN

(11) **EP 1 514 085 B1**
(45) Date de publication et mention de la délivrance du brevet: **02.08.2006**
(21) Numéro de dépôt: 03755576.0
(22) Date de dépôt: 13.06.2003
(51) Int. Cl.: G01K 13/02

(54) **SONDE DE TEMPERATURE TOTALE ET PROCEDE DE DETERMINATION DE TEMPERATURE TOTALE**
GESAMTTEMPERATURSONDE UND GESAMTTEMPERATURBESTIMMUNGSVERFAHREN
TOTAL TEMPERATURE PROBE AND TOTAL TEMPERATURE DETERMINATION METHOD

(30) Priorité: 14.06.2002 FR 0207376
(43) Date de publication de la demande: 16.03.2005
(73) Titulaire: Thales, 92526 Neuilly-sur-Seine Cédex (FR)
(72) Inventeur: SIMEON, Marc, F-94117 Arcueil Cedex (FR)
(74) Mandataire: Collet, Alain
(86) Numéro de dépôt international: PCT/FR2003/001800
(87) Numéro de publication internationale: WO 2003/106948

(56) Documents cités:
- CH-A- 410 464
- FR-A- 2 802 647
- NL-C- 1 002 157

## Description

L'invention se rapporte à une sonde de température totale et à un procédé de détermination de température au moyen d'une telle sonde.

Une sonde de température totale mesure la température totale de l'écoulement d'air dans lequel elle est placée. Lorsque la vitesse de l'écoulement d'air est suffisante, un élément de mesure de la température placé dans la sonde prend la température de l'air grâce au phénomène de convection. Lorsque la vitesse de l'écoulement est faible ou nulle, la mesure est affectée par différents facteurs, parmi lesquels le réchauffage nécessaire au dégivrage ainsi que le rayonnement solaire, facteurs qui ont pour effet de porter la température de la sonde à une valeur supérieure à celle de l'air environnant.

Il est possible de corriger l'erreur de mesure due à l'influence du réchauffage au moyen d'étalonnages et de modélisations prenant en compte plusieurs paramètres, tels que la puissance de réchauffage dissipée dans la sonde et la vitesse de l'écoulement qui doit être mesurée par ailleurs, ou par la sonde elle-même dans le cas d'une sonde multifonction comme celle décrite dans la demande de brevet français n° FR 2 802 647 déposée le 17 décembre 1999.

Une telle modélisation ne prend pas en compte l'élévation de température de la sonde provoquée par le rayonnement solaire. Plus précisément, lorsqu'un avion, sur lequel la sonde est montée, est en phase de vol, la vitesse de l'écoulement de l'air entourant la sonde est suffisante pour que l'influence du rayonnement solaire soit négligeable et la modélisation décrite plus haut est suffisante; En revanche, lorsque l'avion est posé au sol, l'influence du rayonnement solaire devient importante et la mesure de température est altérée.

Une première solution pour éviter l'influence du rayonnement solaire consiste à installer la sonde dans une zone protégée du soleil, sous le fuselage par exemple. Il en résulte des contraintes d'installation qui peuvent être contradictoires avec l'utilisation en vol de la sonde. Les zones protégées du soleil sont, en général, perturbées aérodynamiquement par le train d'atterrissage.

Une autre solution pour éliminer l'influence du réchauffage et du rayonnement solaire lorsque la vitesse de l'écoulement est faible ou nulle consiste à provoquer une convection forcée autour de l'élément de mesure de la sonde ; ceci nécessite une source de pression capable d'un certain débit, qui induit, par exemple par aspiration, une mise en mouvement de l'air autour de l'élément de mesure de la sonde.

Cette dernière solution est très pénalisante du point de vue de l'installation de la sonde sur avion. Elle nécessite l'installation de canalisations spécifiques aspirant de l'air au voisinage de chaque sonde de température, et la mise en place d'un générateur de pression. Cette solution est donc très coûteuse.

L'invention a pour but de pallier les problèmes cités précédemment en permettant l'élévation de la température de la sonde due au rayonnement solaire, et en corrigeant l'erreur de mesure qu'il provoque.

A cet effet, l'invention a pour objet de proposer des moyens pour corriger l'erreur de mesure due à l'influence du rayonnement solaire sur la mesure de température effectuée par la sonde.

Plus précisément, l'invention a pour objet une sonde de mesure de température totale pour aéronef comportant une embase dont une face externe est destinée à être montée de façon sensiblement coplanaire avec une peau de l'aéronef, un mât sortant de l'embase et portant une partie active de la sonde, caractérisé en ce qu'elle comporte en outre plusieurs capteurs de température disposés sur la face externe de l'embase répartis autour du mât.

L'invention a également pour objet un procédé de détermination de température au moyen de la sonde de température totale définie ci-dessus et caractérisé en ce qu'on détermine la température totale de l'air entourant la sonde en fonction de la mesure de température effectuée dans la partie active de la sonde, et en fonction de l'écart maximum existant entre les mesures réalisées par les capteurs de température.

Il est bien entendu que l'invention n'est pas limitée à une sonde ne comportant que des capteurs de température. L'invention peut notamment être mise en oeuvre dans des sondes multifonctions comportant en plus des capteurs de température, d'autres types de capteurs tels que des capteurs de pression.

L'invention sera mieux comprise et d'autres avantages apparaîtront à la lecture de la description détaillée d'un mode de réalisation de l'invention, description illustrée par le dessin joint dans lequel :

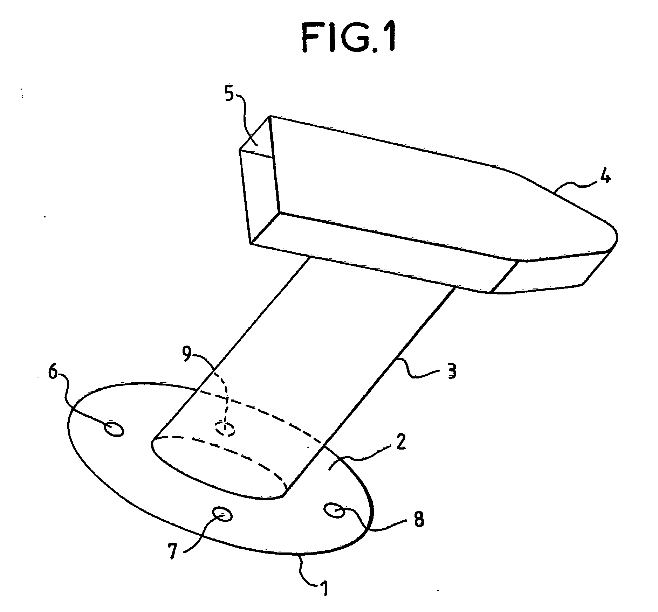

- la figure 1 représente en perspective une sonde de mesure de température totale.

La sonde représentée sur la figure 1 comporte une embase 1 dont une face externe 2 est destinée à être montée de façon sensiblement coplanaire avec une peau d'un aéronef sur laquelle la sonde est montée. La sonde comporte également un mât 3 sortant de l'embase 1. Le mât 3 porte une partie active 4 de la sonde. La partie active 4 comporte une entrée d'air 5 par laquelle pénètre un filet d'air dont on cherche à connaître la température totale. A l'intérieur de la partie active 4, un capteur de température réalise la mesure de température totale de la sonde. Pour plus de détails concernant la réalisation de la partie active 4 de la sonde, on pourra se reporter à la demande de brevet français publiée sous le numéro FR 2 802 647.

Conformément à l'invention, la sonde comporte plusieurs capteurs de température 6 à 9 disposés sur la face externe 2 de l'embase 1. Les capteurs 6 à 9 sont répartis autour du mât 3. Ces capteurs de température 6 à 9 comportent par exemple chacun un thermocouple dont le point chaud est situé au niveau de la face externe 2 de l'embase 1. Sur la figure 1 quatre capteurs 6 à 9 ont été représentés. Il est bien entendu que l'invention n'est limitée à quatre capteurs. Le nombre de capteurs de température ainsi que leur position peuvent être déterminés lors de la conception de la sonde en fonction de sa forme.

Avantageusement, les capteurs de température 6 à 9 sont isolés thermiquement de la face externe 2 de l'embase 1. Ainsi, ils seront moins perturbés par une éventuelle conduction tendant à homogénéiser la température de l'embase 1.

Avantageusement, la sonde comporte au moins trois capteurs de température. Ainsi, lorsque la sonde est soumise au rayonnement solaire, l'un au moins des capteurs est à l'ombre du mât 3 ou de la partie active 4.

Pour déterminer la température totale de l'air entourant l'aéronef, au moyen de la sonde décrite plus haut, on détermine l'écart maximum existant entre les différentes mesures réalisées par les capteurs de température 6 à 9. L'un des capteurs 6 à 9 étant à l'ombre. L'écart maximum est représentatif du rayonnement solaire atteignant la sonde. On peut ensuite corriger la mesure de température effectuée au moyen de la partie active 4 de la sonde avec cet écart maximum.

La correction de la mesure de température réalisée au moyen de la partie active 4 peut être étalonnée par exemple en faisant varier un rayonnement atteignant la sonde et en notant pour une température totale donnée de l'air entourant la sonde, les valeurs mesurées par la partie active 4 de la sonde et par les capteurs 6 à 9 et ceci pour différentes valeurs du rayonnement. Cet étalonnage permet de déterminer la différence entre la mesure réalisée par la partie active 4 de la sonde et la température totale réelle de l'air entourant la sonde en fonction des mesures réalisées par les capteurs de température 6 à 9. On peut réaliser cet étalonnage pour plusieurs niveaux de rayonnement atteignant la sonde. Chaque niveau de rayonnement donnera un écart maximum entre les mesures réalisées par les capteurs de température ainsi qu'une différence entre la mesure réalisée par la partie active 4 et la température totale réelle de l'air entourant la sonde. La température totale réelle peut être mesurée par la partie active 4 en l'absence de tout rayonnement.

Au cours de l'utilisation normale de la sonde, à partir de l'écart maximum entre les mesures réalisées par les capteurs de température 6 à 9, on pourra déterminer une correction à appliquer à la mesure réalisée par la partie active 4 de la sonde par exemple par interpolation entre résultats obtenus pour chaque niveau de rayonnement au cours de l'étalonnage.

Avantageusement, on détermine la température totale de l'air entourant la sonde en fonction de la vitesse de l'air entourant la sonde. En effet, l'influence du rayonnement solaire décroît lorsque la vitesse de l'air entourant la sonde augmente. Comme précédemment, on peut étalonner la correction à effectuer sur la mesure de température réalisée par la partie active 4 de la sonde. On peut réaliser cet étalonnage en soufflerie, en faisant varier la vitesse d'un écoulement d'air entourant la sonde, tout en l'éclairant avec un rayonnement donné.

## Revendications

1. Sonde de mesure de température totale pour aéronef comportant une embase (1) dont une face externe (2) est destinée à être montée de façon sensiblement coplanaire avec une peau de l'aéronef, un mât (3) sortant de l'embase (1) et portant une partie active (4) de la sonde, **caractérisée en ce qu'**elle comporte en outre plusieurs capteurs de température disposés sur la face externe de l'embase (1) et répartis autour du mât (3).

2. Sonde selon la revendication 1, **caractérisée en ce que** les capteurs de température (6 à 9) sont isolés thermiquement de la face externe (2) de l'embase (1).

3. Sonde selon l'une des revendications précédentes, **caractérisée en ce qu'**elle comporte au moins trois capteurs de température (6 à 9).

4. Procédé de détermination de température au moyen d'une sonde de température totale selon la revendication 1, **caractérisé en ce qu'**on détermine la température totale de l'air entourant la sonde en fonction de la mesure de température effectuée dans la partie activé (4) de la sonde, et en fonction de l'écart maximum existant entre les mesures réalisées par les capteurs de température (6 à 9).

5. Procédé selon la revendication 4, **caractérisé en ce que** l'on détermine la température totale de l'air entourant la sonde en fonction de la vitesse de l'air entourant la sonde.

## Claims

1. Total temperature measurement probe for an aircraft, comprising a base (1), an external face (2) of which is intended to be mounted so as to be substantially coplanar with a skin of the aircraft, and a mast (3) that projects from the base (1) and supports an active part (4) of the probe, **characterized in that** it furthermore includes several temperature sensors placed on the external face of the base (1) and distributed around the mast (3).

2. Probe according to Claim 1, **characterized in that** the temperature sensors (6 to 9) are thermally insulated from the external face (2) of the base (1).

3. Probe according to either of the preceding claims, **characterized in that** it includes at least three temperature sensors (6 to 9).

4. Method of determining temperature by means of a total temperature probe according to Claim 1, **characterized in that** the total temperature of the air surrounding the probe is determined on the basis of the temperature measurement carried out in the active part (4) of the probe and on the basis of the maximum difference that exists between the measurements made by the temperature sensors (6 to 9).

5. Method according to Claim 4, **characterized in that** the total temperature of the air surrounding the probe is determined as a function of the speed of the air surrounding the probe.

## Patentansprüche

1. Gesamttemperaturmesssonde für ein Luftfahrzeug, mit einer Grundplatte (1), von der eine Außenfläche (2) dazu bestimmt ist, im Wesentlichen koplanar zu einer Haut des Luftfahrzeugs montiert zu werden, wobei ein Mast (3) aus der Grundplatte (1) austritt und einen aktiven Teil (4) der Sonde trägt, **dadurch gekennzeichnet, dass** sie außerdem mehrere Temperaturfühler aufweist, die auf der Außenfläche der Grundplatte (1) angeordnet und um den Mast (3) herum verteilt sind.

2. Sonde nach Anspruch 1, **dadurch gekennzeichnet, dass** die Temperaturfühler (6 bis 9) thermisch von der Außenfläche (2) der Grundplatte (1) isoliert sind.

3. Sonde nach einem der vorhergehenden Ansprüche, **dadurch gekennzeichnet, dass** sie mindestens drei Temperaturfühler (6 bis 9) aufweist.

4. Verfahren zur Temperaturbestimmung mittels einer Gesamttemperatursonde nach Anspruch 1, **dadurch gekennzeichnet, dass** die Gesamttemperatur der die Sonde umgebenden Luft in Abhängigkeit von der im aktiven Teil (4) der Sonde durchgeführten Temperaturmessung und in Abhängigkeit von der maximalen Abweichung zwischen den von den Temperaturfühlern (6 bis 9) durchgeführten Messungen bestimmt wird.

5. Verfahren nach Anspruch 4, **dadurch gekennzeichnet, dass** die Gesamttemperatur der die Sonde umgebenden Luft in Abhängigkeit von der Geschwindigkeit der die Sonde umgebenden Luft bestimmt wird.
